Europäisches Patentamt

European Patent Office

Office européen des brevets

(11) Publication number: **0 405 792 A2**

# EUROPEAN PATENT APPLICATION

(21) Application number: 90306426.9

(22) Date of filing: 13.06.90

(51) Int. Cl.⁵: **G21D 3/04**

(30) Priority: 30.06.89 GB 8915068

(43) Date of publication of application:
02.01.91 Bulletin 91/01

(84) Designated Contracting States:
DE FR GB

(71) Applicant: **NNC LIMITED**
**Booths Hall Chelford Road**
**Knutsford Cheshire WA16 8QZ(GB)**

(72) Inventor: **Bilsborough, Roy**
**36A Ullswater Road**
**West Heath, Congleton, Cheshire CW12**
**4LX(GB)**

(74) Representative: **George, Sidney Arthur**
**The General Electric Company P.l.c. Central**
**Patent Department The Hirst Research**
**Centre East Lane**
**Wembley Middlesex, HA9 7PP(GB)**

(54) Movement detection system.

(57) In order to detect abnormal movement of a body, such as a boiler unit (19,20,21) in a nuclear reactor, a fluid is fed into a passage (24), and movement of the body causes variation in the resistance of the passage to flow of the fluid. This variation is detected by measuring a change in flow rate or a change in fluid pressure. The detector preferably comprises a sleeve valve (22) comprising a pipe section (24) which is attached to a central one of three adjacent boiler units and a sleeve (30) which is normally positioned over a port (28,29) in the pipe section and which is coupled to both of the outer boiler units, so that abnormal movement of any of the three units causes opening of the port. The coupling comprises an arrangement of levers and linkages (31-41) which compensates for normal movements of the boiler units caused by temperature rise.

Fig.2.

Fig.3.

## MOVEMENT DETECTION SYSTEM

This invention relates to a movement detection system for use in detecting movement of a body, such as abnormal movement resulting from failure of a member supporting the body. For example, the system may be used for detecting abnormal movement of a boiler unit in a nuclear reactor, caused by failure of a boiler support.

In the construction of advanced gas-cooled reactors (AGRs) a number of vertical boiler units are mounted around the reactor core and within the concrete pressure vessel. Heat is extracted from the core by passing carbon dioxide coolant gas over the fuel, and is transferred from the carbon dioxide coolant to the water in each boiler unit. The steam thereby produced drives a turbine to which is coupled a generator.

Each boiler unit is supported on horizontal beams, and these beams are subject to corrosion or erosion by the hot gas which flows around them. Eventually a support beam may fail, resulting in an abnormal movement of the boiler unit.

It is clearly necessary to provide a warning of such failure, and this has previously been effected by a number of different methods. In one such method, mechanical markers have been attached to the boiler units or their supports, so that a visual indication of abnormal boiler unit movement is given. However, such devices can be viewed only by inservice examination equipment during reactor shutdown. In an alternative method, cables which connect reactor temperature monitoring thermocouples to their associated indicators are located in such a manner that they become severed in the event of abnormal boiler unit movement. This severing will be apparent from the lack of temperature indication.

It is an object of the present invention to provide an improved system for detection of movement of a body.

According to one aspect of the invention there is provided a movement detection system for detecting movement of a body, comprising means to feed a fluid into a passage; valve means operable in response to movement of said body to vary the resistance of said passage to fluid flow; and indicator means operative to provide an indication of the occurrence of said movement in response to a change in fluid flow along said passage caused by said varied resistance.

According to another aspect of the invention there is provided a movement detection system for detecting movement of a first body or a second body relative to the other of said two bodies, comprising a pipe which is coupled to said first body for movement therewith and which forms at least part of a passage for receiving fluid; a sleeve which is coupled to said second body for movement therewith and which is a sliding fit on said pipe, whereby relative movement between said bodies causes the sleeve to cover or uncover an aperture in the wall of said pipe, means to feed a fluid into said passage; and indicator means operative to provide an indication in response to a change in fluid flow along said passage caused by said covering or uncovering of said aperture.

The system may be used for detecting abnormal movement of a boiler unit, such as a boiler unit in a pressure vessel of a nuclear reactor. The fluid may then comprise reactor coolant fluid.

An embodiment of the invention will now be described, by way of example, with reference to the accompanying drawings, in which

Figure 1 is a block schematic diagram of part of an advanced gas-cooled reactor;

Figure 2 is a schematic pictorial view of part of a boiler in the reactor of Figure 1, incorporating a movement detection system in accordance with the invention;

Figure 3 is an enlarged pictorial view of one form of sleeve valve forming part of the system of Figure 2; and

Figure 4 is a pictorial view of an alternative form of sleeve valve for use in the system.

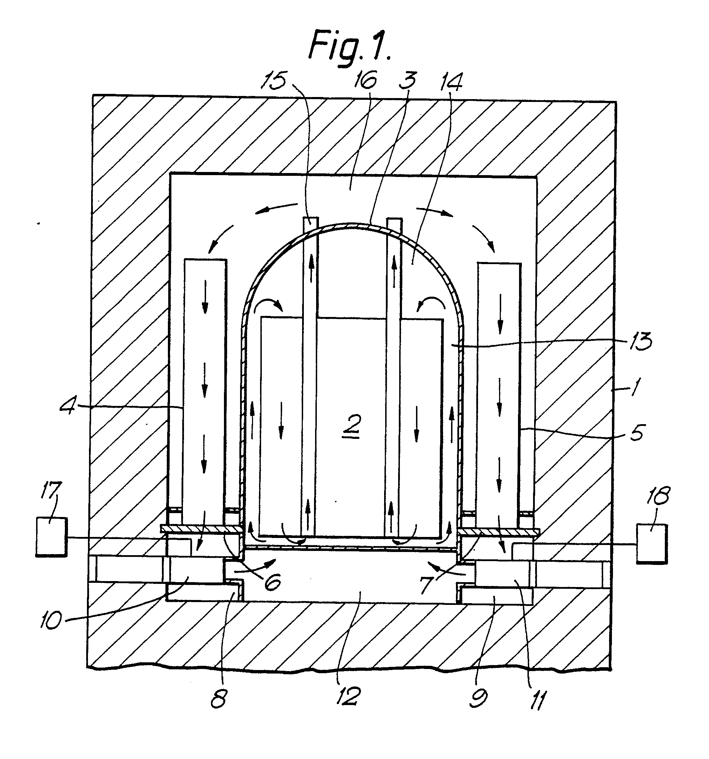

Referring to Figure 1 of the drawings, an advanced gas-cooled reactor (AGR) includes a concrete pressure vessel 1 in which the reactor core 2 is mounted. The core is contained within a domed steel shell 3 which acts as a gas baffle. Vertical boiler units, such as the boiler units 4 and 5, are mounted around the core. There may be, for example, twelve boiler units arranged in four groups of three units, each group of units together constituting a boiler. The boiler units are contained in an annulus between the gas baffle 3 and the inner surface of the pressure vessel 1. The boiler units are mounted on horizontal beams, such as beams 6 and 7, which are supported at their ends by the pressure vessel 1 and the gas baffle 3.

Carbon dioxide coolant is circulated through the core to cool the fuel elements, and the carbon dioxide heated thereby passes downwards through the boilers, so that steam is generated for driving a turbine-generator unit (not shown).

Four quadrant plenum chambers, of which only two chambers 8 and 9 are shown, are provided beneath the respective boilers. Gas circulators, of which only two circulators 10 and 11 are shown, are provided to circulate the carbon dioxide coolant. The gas is drawn from the plenum chamber at the bottom of each boiler by the respective circulator, and is discharged into a sub-core plenum 12. The gas flow then splits, part enters the bottom of the fuel channels directly and the remainder passes firstly up an annular passage 13 between the outside of the core 2 and the inner surface of the gas baffle 3. This latter flow, after entering the hemispherical space 14 within the gas baffle 3 and above the core 2, passes down through the core structure through special passages until, at the bottom of the core, it combines with the above-mentioned direct flow. The combined flow then passes up the fuel channels and passes via tubes or pipes 15 through the hemispherical space 12 of the gas baffle to enter an upper plenum 16. The hot gas from the plenum is drawn down through the boilers and back to the circulators.

The carbon dioxide is continuously monitored, and the existence of the coolant monitoring equipment 17 and 18 makes it possible to provide a simple boiler movement detection system in accordance with the present invention.

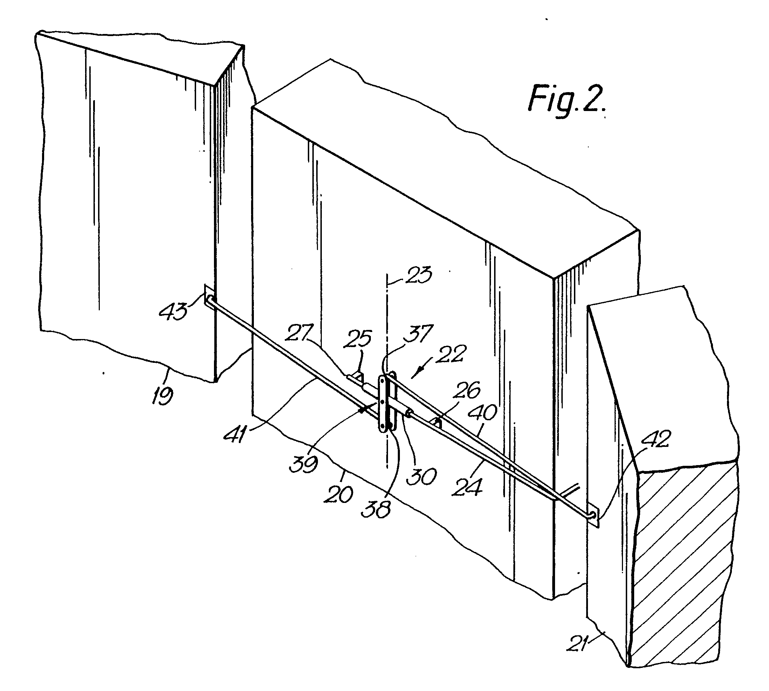

Figure 2 shows, schematically, parts of three adjacent boiler units 19, 20, 21, which together form a boiler of one quadrant of the reactor. A sleeve valve 22 is fixed to a surface of the casing of the central boiler unit 20, such that the valve is symmetrically located about a vertical centre-line 23 of the surface.

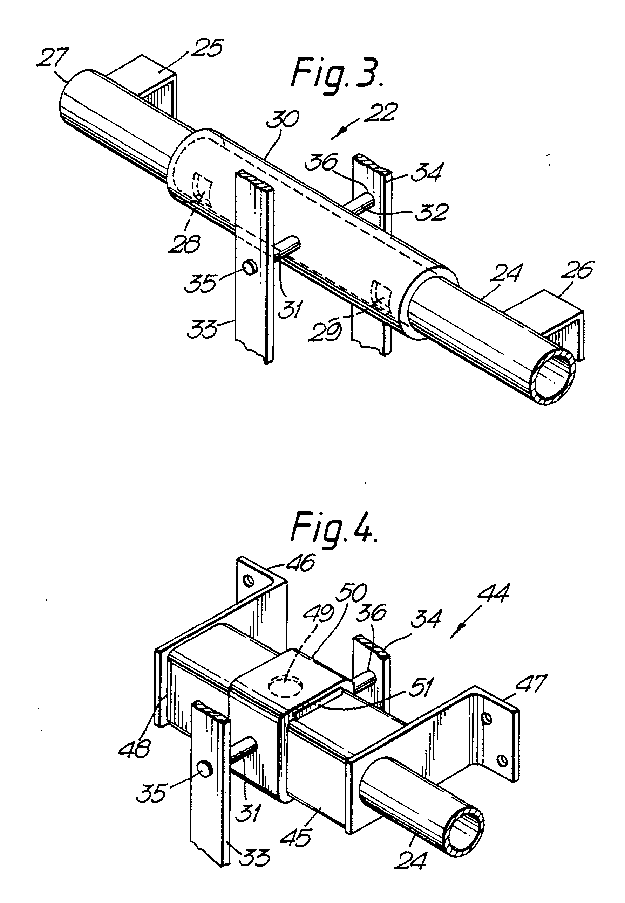

Referring also to Figure 3 which shows, schematically, a detail of the sleeve valve 22, a pipe 24 is fixed to the boiler unit casing by spaced-apart brackets 25 and 26. The end 27 of the pipe 24 adjacent the bracket 25 is closed, and the opposite end of the pipe is connected to a source (not shown) which feeds carbon dioxide reactor coolant under pressure into the pipe. The gas flow rate is monitored by means (not shown) outside the bounds of the reactor core. The pipe has two apertures 28 and 29 through its wall, the apertures being spaced apart along the pipe so that they are equi-distant from the centre-line 23 and on opposite sides of that centre-line. A sleeve 30, which is just long enough to cover both apertures 28, 29 simultaneously, is a sliding fit on the pipe 24.

Two horizontal pivot rods 31, 32 are attached, for example by welding, to diametrally opposite points at the centre of length of the sleeve 30. Two bars 33, 34 are pivoted at their centre points 35, 36 to the ends of the pivot rods 31, 32, respectively. Corresponding ends of the bars are interconnected by upper and lower horizontal connectors 37, 38, so that the bars and the connectors together form a rigid structure 39 which is centrally pivoted on the pivot rods 31, 32. Horizontal upper and lower rods 40, 41 are pivotally connected at one of their ends to the connector 37 and the connector 38, respectively. The other ends of the rods 40, 41 are pivoted to the brackets 42, 43 are equidistant from the centre-line 23, and the rods 40, 41 are of equal lengths, so that under normal conditions the bars 33, 34 will be vertical and aligned with the centre-line 23, and the sleeve 30 will cover both apertures 28, 29 in the pipe 24.

In use of the detection system, coolant gas is fed into the pipe 24, but there will be substantially zero gas flow, since the end 27 of the pipe is closed and the apertures 28 and 29 are covered by the sleeve 30. When the reactor is run up, the temperature of the boiler units will increase very considerably, and the heights of the brackets 25,26,42 and 43 above the boiler unit bases will increase, but all will increase substantially equally. Furthermore, the mounting brackets 42,43 will also move radially inwards towards the centre of the reactor due to horizontal thermal expansion of the boiler unit casings. The brackets are also moved radially inwards due to the action of a horizontal superheater penetration (not shown) pushing against the boiler units. Again, all of these bracket movements will be of equal magnitude. The lengths of the rods 40, 41 and the bars 33, 34 will increase due to the high temperature, but again all changes will be substantially symmetrical, and although the bars 33 and 34 will not remain vertical and parallel to the centre line of the unit 20, there will be no appreciable change in the position of the sleeve 30 on the pipe 24. Hence, under all normal operating conditions of the reactor, the apertures 28 and 29 will remain closed, and the gas pressure will remain steadyl, with substantially zero gas flow through the pipe.

However, in the event of failure of a boiler unit support, the boiler unit will tilt. Consider, firstly tilting of the boiler unit 19 towards the unit 20. The rod 41 will push the lower end of the structure 39 towards the right. The upper end of the structure 39 will remain stationary, because the rod 40 has not moved. The structure will therefore be rotated in an anti-clockwise direction. The sleeve 30 will therefore slide along the pipe 24 towards the right, and the aperture 28 will become uncovered. A sudden increase in coolant flow along the pipe will result and this will be detected by the flow rate monitoring device.

It will be apparent that tilting of the boiler unit 19 away from the unit 20 will result in movement of the sleeve 30 in the opposite direction and that the aperture 29 will therefore become uncovered.

Tilting of the boiler unit 21 due to support failure will cause movement of the upper end of the structure 39, whilst the lower end of the structure will remain stationary. Depending upon the direction of tilting of the unit 21, one or other of the apertures 28, 29 will thereby become uncovered, as can readily be deduced from the above description.

If, on the other hand, the central boiler unit 20 tilts, for example towards the unit 21, the rods 40 and 41 will be substantially unaffected, and the sleeve 30 will therefore remain in its normal position. However, the pipe 24 will be moved towards the right, and the aperture 29 will therefore become uncovered. If the unit 20 tilts in the opposite direction, the same process will occur, but with the aperture 28 becoming uncovered.

Figure 4 shows an alternative form of valve for use in the system. In this case, the valve 44 comprises a box 45 which is connected to a shortened pipe 24 and is attached to the casing of the boiler unit 20 by brackets 46,47. The box is sealed at its end 48 where it is attached to the bracket 46. An aperture 49 is formed centrally in a wall of the box. A sleeve 50 is slidable on the outside of the box so that it covers or uncovers the aperture 49. The sleeve is moved by bars 33,34 and rods 40,41 as in Figure 2. A strip 51 of anti-friction material is attached to the inner surface of the sleeve 50 to reduce friction between the sleeve and the box. This valve acts in a similar manner to the valve 22, but in this case the sleeve 50 is short and is arranged to uncover the single aperture in either direction of sliding.

The end 27 of the pipe 24, or the box 45, may be closed, as described above, or could alternatively be open or at least partially open. Furthermore, even if the pipe or box be closed, there may be some continuous leakage from the valve. In the latter cases there would normally be a steady flow of coolant through the pipe, but the flow rate would increase if either the aperture 28 or the aperture 29 (Figure 3), or the aperture 49 (Figure 4) were uncovered due to tilting of a boiler unit.

The monitoring of the gas flow and/or pressure or pipe flow resistance could be effected intermittently at suitable time intervals. Gas could be injected into, or extracted from, the pipe at a known flow rate, and the pressure loss in the pipe could . be measured to check for boiler unit tilting.

Although the described sleeve valves provide very convenient devices for changing the gas flow rate or pressure in the event of boiler unit support failure, other devices or methods for changing gas flow could be used. For example, movement of a boiler unit might cause the insertion or removal of an end closure for the pipe, which end closure constitutes a valve. Alternatively, a rotary valve might be opened or closed by the movement.

Although it is obviously convenient to make use of the existing coolant gas supply in the boiler unit movement detection system, it will be apparent that any other suitable gas or liquid might be used.

It will be realised that the use of the present movement detection system in a nuclear reactor is very advantageous. Firstly, the detection system can make use of the coolant gas which is already provided. The described embodiment of the invention requires the addition of a valve and the associated linkage, which are cheap to produce. These components can be added to the reactor at any suitable time. The system gives an immediate indication that there has been an abnormal boiler unit movement, without awaiting shutdown and without relying on cable-severing techniques. Once a reactor has gone critical, work inside the reactor involving shutdown is time-consuming and involves considerable loss of electrical output. The sleeve valve devices described above can be installed very rapidly.

Although the movement detection system is described above in relation to boiler units in a nuclear reactor, a system in accordance with the invention which involves the monitoring of a change in fluid flow brought about by movement of a body may be used for monitoring movement in any suitable installation.

## Claims

1. A movement detection system for detecting movement of a body, (19,20,21) characterised by means to feed a fluid into a passage (24); valve means (22;44) operable in response to movement of said body to vary the resistance of said passage to fluid flow; and indicator means (17,18) operative to provide an indication of the occurrence of said movement in response to a change in fluid flow along said passage caused by said varied resistance.

2. A system as claimed in Claim 1, characterised in that the valve means (22;44) comprises means which is at least partially inserted into or at least partially withdrawn from said passage (24) in response to said movement.

3. A system as claimed in Claim 1, characterised in that the valve means (22;44) comprises a sleeve (30;50) which is a sliding fit on a pipe (24) forming  . at least part of the passage: and wherein the sleeve is slid relative to the pipe to cover or uncover an aperture (28,29;49) in the wall of said pipe in response to said movement.

4. A movement detection system for detecting movement of a first body (20) or a second body (19) relative to the other of said two bodies, characterised by a pipe (24) which is coupled to said first body for movement therewith and which forms at least part of a passage for receiving fluid; a sleeve (30;50) which is coupled to said second body for movement therewith and which is a sliding fig on said pipe, whereby relative movement between said bodies causes the sleeve to cover or uncover an aperture (28,29;49) in the wall of said pipe, means to feed a fluid into said passage; and indicator means (17,18) operative to provide an indication in response to a change in fluid flow along said passage caused by said covering or uncovering of said aperture.

5. A system as claimed in Claim 4, further arranged to detect movement of said first body (20), said second body (19) or a third body (21) relative to the other two of said three bodies, characterised in that said sleeve (30;50) is also coupled to said third body for movement therewith.

6. A system as claimed in Claim 5, characterised in that said second and third bodies (19,21) are located on opposite sides of said first body (20); in that there is relative sliding movement between said sleeve (30;50) and said pipe (24) in a first direction or a second direction in response to relative movement between said second and first bodies, and relative sliding movement in said first direction or said second direction in response to relative movement between said third and first bodies; and in that the relative sliding movement between the sleeve and the pipe causes covering or uncovering of an aperture (28,29;49) in the wall of the pipe.

7. A system as claimed in Claim 6, characterised by a member (39) pivotally coupled to said second and third bodies (19,21) at first and second spaced-apart positions (37,38) respectively, on said member and pivoted to said sleeve at a third position (35,36) between said first and second positions.

8. A system as claimed in Claim 7, characterised in that said member (24) is coupled to said second and third bodies (19,21) by rods (40,41) of substantially equal lengths; and wherein said third position (35,36) is equally spaced from said first and second positions (37,38).

9. A nuclear reactor characterised by a movement detection system as claimed in any preceding claim, wherein the or each body comprises (19,20,21) a respective boiler unit.

10. A nuclear reactor as claimed in Claim 9, characterised in that the fluid comprises reactor coolant. 1

11. A nuclear reactor as claimed in Claim 10, characterised in that the coolant comprises carbon dioxide.

# Fig.1.

*Fig.2.*

EP 0 405 792 A2

Fig. 3.

Fig. 4.